# EUROPEAN PATENT APPLICATION

(11) **EP 4 810 829 A1**
(43) Date of publication of application: **23.09.2026**
(21) Application number: 24891424.4
(22) Date of filing: 13.11.2024
(51) Int. Cl.: F16H 57/03, B60K 1/00, B60L 15/00, F16H 57/02, F16H 57/025, F16H 57/037

(54) **ELECTRIC AXLE APPARATUS FOR VEHICLE**

(30) Priority: 15.11.2023 JP 2023194317; 24.01.2024 JP 2024008575
(71) Applicant: IJTT Co., Ltd., Yokohama-shi Kanagawa 221-0056 (JP)
(72) Inventor: HAMANAKA Yoshihisa, Ebina-shi, Kanagawa 243-0434 (JP); KATO So, Ebina-shi, Kanagawa 243-0434 (JP); ISHIKAWA Tomohiro, Ebina-shi, Kanagawa 243-0434 (JP)
(74) Representative: Schaumburg und Partner Patentanwälte mbB
(86) International application number: PCT/JP2024/040281
(87) International publication number: WO 2025/105388

(57) **Abstract**

Secure fastening strength and bending strength. An electric axle device 100 for a vehicle comprises: an electric motor 3; a reducer 2 connected to an output side of the electric motor; a differential device 5 connected to an output side of the reducer; left and right axle shafts 21 connected to an output side of the differential device; left and right axle shaft casings 30 that respectively contain the left and right axle shafts; a common casing 31 that is common to the reducer and the differential device, the common casing being sandwiched between the left and right axle shaft casings and fixed to the left and right axle shaft casings with bolts 32; and a reinforcing member 33 that is arranged on an outside of the common casing and connects the left and right axle shaft casings.

## Description

### BACKGROUND

### Technical Field

This disclosure relates to an electric axle device for a vehicle.

### Background Art

In a rigid axle suspension system used in vehicles such as trucks, an axle housing containing a differential device is connected to a vehicle body via springs such as leaf springs. In recent years, there have been examples in which a reducer and an electric motor are attached to the axle housing to form an electric axle device for a vehicle. By using this vehicle electric axle device, existing vehicles can be converted to electric vehicles relatively easily.

### [Prior art documents]

### [Patent documents]

[Patent document 1] JP 2017-150658 A

### SUMMARY

### Technical Problem

However, if a typical banjo type axle housing is used, there are problems such as restrictions on gear ratio design.

Therefore, from a perspective of ensuring design freedom, it is being considered to divide the general axle housing into a central portion that houses the differential device, and left and right portions that house the left and right axle shafts, and to fasten and fix a casing common to a reducer and the differential device to the left and right portions with bolts.

However, with this structure, there are problems in ensuring the fastening strength between the casing and the left and right portions, and the bending strength of the casing and the left and right portions as a whole.

The present disclosure has been made in view of the above circumstances, and its purpose is to provide an electric axle device for a vehicle that can ensure fastening strength and bending strength.

### Solution to Problem

According to one aspect of the present disclosure, there is provided an electric axle device for a vehicle comprising:
an electric motor;
a reducer connected to an output side of the electric motor;
a differential device connected to an output side of the reducer;
left and right axle shafts connected to an output side of the differential device;
left and right axle shaft casings that respectively contain the left and right axle shafts;
a common casing that is common to the reducer and the differential device, the common casing being sandwiched between the left and right axle shaft casings and fixed to the left and right axle shaft casings with bolts; and
a reinforcing member that is arranged on an outside of the common casing and connects the left and right axle shaft casings.

Preferably, brackets are fixed to the left and right axle shaft casings by welding, and both ends of the reinforcing member are fixed to the left and right brackets by welding.

Preferably, the reinforcing member is formed by a long, thin metal plate extending in the left-right direction and formed in a hat shape.

Preferably, the reinforcing member is arranged on a lower side of the common casing.

Preferably, the reinforcing member is arranged on an upper side of the common casing.

Preferably, the reinforcing member is arranged on a rear side of the common casing.

Preferably, the common casing extends forward from a position between the left and right axle shaft casings.

Preferably, the common casing is a casting made of aluminum or an aluminum alloy.

Preferably, the left and right axle shaft casings have flanges that are attached to the common casing by the bolts.

Preferably, both ends of the reinforcing member are fixed to the left and right flanges.

Preferably, the reinforcing member has a main body portion extending in the left-right direction and formed with an arc-shaped cross section, and hook portions extending radially inward from the left and right ends of the main body portion,
the flange has a disk-shaped main body portion and a protrusion portion provided on an outer periphery of the main body portion so as to protrude radially outward, and
the main body portion is superimposed on an arc-shaped outer peripheral surface of the protrusion portion, and the hook portions are superimposed on outer left-right side surfaces of the protrusion portion.

Preferably, the hook portions are fixed to the outer left-right side surfaces of the protrusion portion by bolts.

According to the present disclosure, fastening strength and bending strength can be ensured.

### BRIEF DESCRIPTION OF THE DRAWINGS

FIG. 1 is a rear view showing an electric axle device according to a first embodiment of the present disclosure.
FIG. 2 is a plan view showing the electric axle device according to the first embodiment of the present disclosure.
FIG. 3 is a right side view showing the electric axle device according to the first embodiment of the present disclosure.
FIG. 4 is a skeleton diagram that schematically shows an internal structure of the electric axle device.
FIG. 5 is a cross-sectional view taken along line V-V in FIG. 1.
FIG. 6 is a cross-sectional view taken along line VI-VI of FIG. 1
FIG. 7 is a rear view showing the electric axle device according to a second embodiment of the present disclosure.
FIG. 8 is a plan view showing the electric axle device according to the second embodiment of the present disclosure.
FIG. 9 is a right side view showing the electric axle device according to the second embodiment of the present disclosure.
FIG. 10 is a cross-sectional view taken along line X-X in FIG. 7.
FIG. 11 is a cross-sectional view taken along line XI-XI in FIG. 9.

### DESCRIPTION OF THE EXAMPLE EMBODIMENTS

Hereinafter, embodiments of the present disclosure will be described with reference to the accompanying drawings. It should be noted that the present disclosure is not limited to the following embodiments.

### [First embodiment]

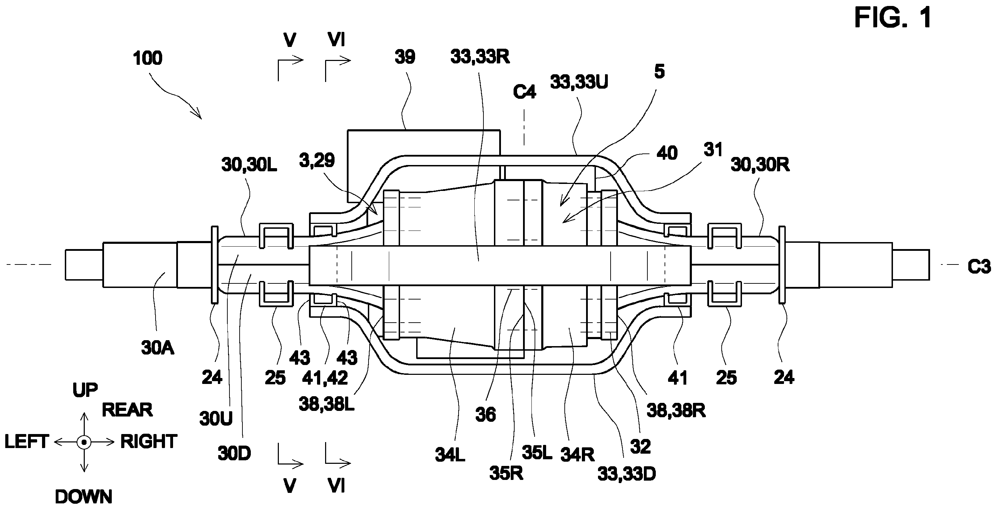

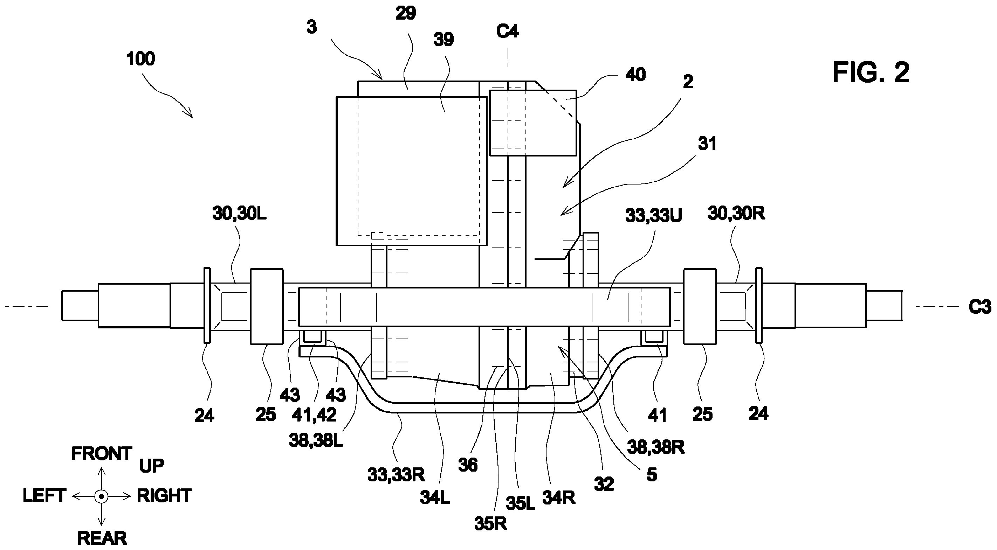

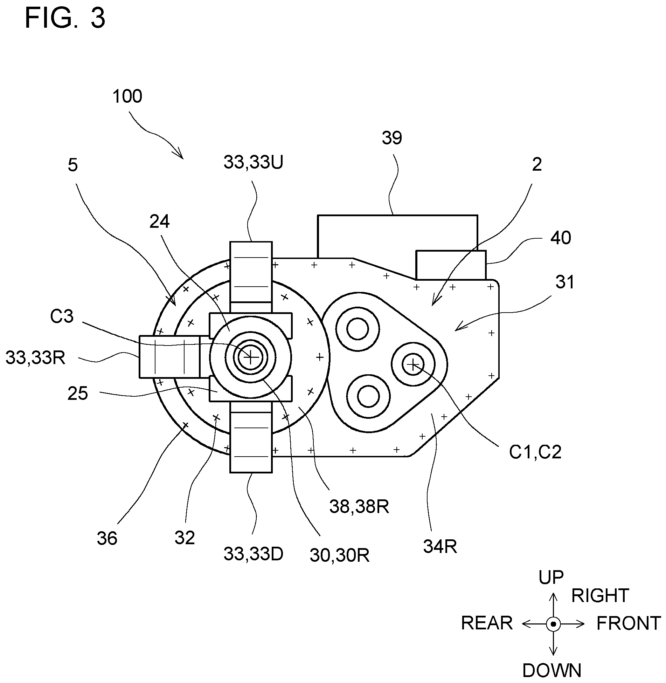

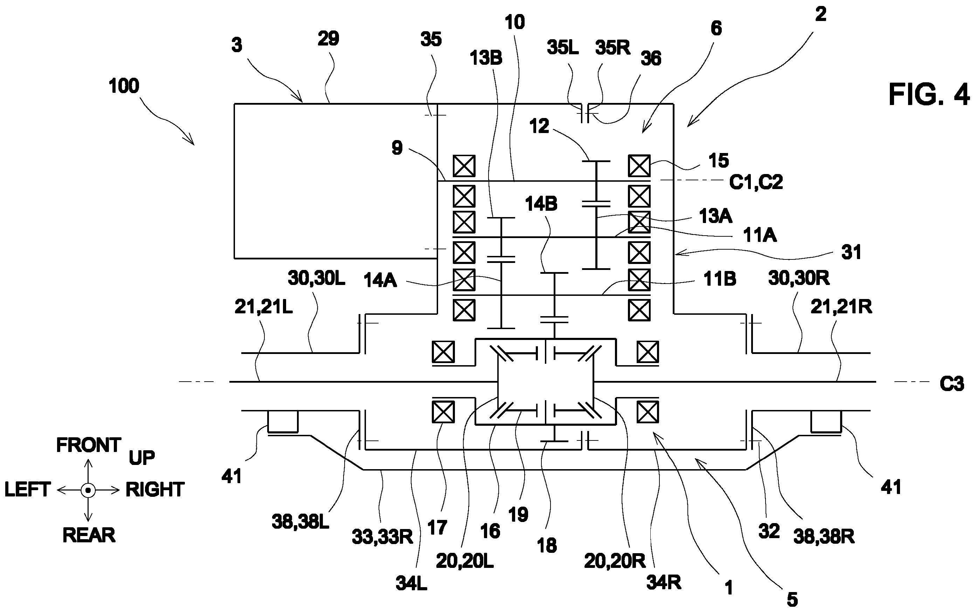

FIGS. 1 to 3 show an electric axle device according to a first embodiment of the present disclosure, with FIG. 1 being a rear view, FIG. 2 being a plan view, and FIG. 3 being a right side view. FIG. 4 is a skeleton diagram that schematically shows an internal structure of the electric axle device. For convenience, front, rear, left, right, up and down directions are defined as shown in the figures. These directions generally coincide with the directions of the vehicle.

The electric axle device 100 is adapted to be applied to a vehicle, and in this embodiment, is adapted to be applied to a truck. However, a type of vehicle is optional. The electric axle device 100 is configured to drive the left and right rear wheels of the vehicle, and forms a part of a rigid axle (or axle-mounted) suspension system for the rear wheels.

The electric axle device 100 comprises an electric motor (motor) 3, a reducer 2 connected to an output side of the electric motor 3, a differential device 5 connected to an output side of the reducer 2, left and right axle shafts 21 (21L, 21R, see FIG. 4) connected to output sides of the differential device 5, and left and right axle shaft casings 30 (30L, 30R) that respectively contain the left and right axle shafts 21.

The electric axle device 100 also comprises a common casing 31 that is common to the reducer 2 and the differential device 5. The common casing 31 is an integral unit of the casing of the reduction gear 2 and the casing of the differential device 5. The common casing 31 is disposed between the left and right axle shaft casings 30 and is fixed to the left and right axle shaft casings 30 with a plurality of bolts 32. In the drawing, only a center line of the bolt 32 is shown by an imaginary line (the same applies below).

The left and right axle shaft casings 30 form the left and right portions of a typical axle housing. The common casing 31 also forms a central portion of the typical axle housing.

The common casing 31 extends forward from a position between the left and right axle shaft casings 30. The common casing 31 is a casting made of aluminum or an aluminum alloy. On the other hand, the left and right axle shaft casings 30 are made of iron and are constructed by assembling a plurality of parts by welding.

In this embodiment, the common casing 31 is not common to the electric motor 3. The casing 29 of the electric motor 3 is fixed to the common casing 31 by a plurality of bolts 35 (see FIG. 4). The electric motor 3 includes electrical components (not shown) such as a stator and a rotor housed in a casing 29.

As shown in FIG. 4, the reducer 2 includes a gear mechanism 6 contained in a common casing 31. The gear mechanism 6 of this embodiment is configured to reduce rotational driving force of the electric motor 3 in three stages and transmit it to the differential device 5 .

The gear mechanism 6 comprises a drive shaft 10 coaxially connected to the output shaft 9 of the electric motor 3, a first reduction shaft 11A and a second reduction shaft 11B arranged parallel to the drive shaft 10, and a drive pinion gear 12 and a first spur gear 13A attached to the drive shaft 10 and the first reduction shaft 11A respectively and meshed with each other. The number of teeth of the first spur gear 13A is greater than the number of teeth of the drive pinion gear 12.

The gear mechanism 6 also includes a first pinion gear 13B and a second spur gear 14A attached to the first reduction shaft 11A and the second reduction shaft 11B respectively and meshed with each other, and a second pinion gear 14B attached to the second reduction shaft 11B. The number of teeth of the second spur gear 14A is greater than the number of teeth of the first pinion gear 13B.

The gear mechanism 6 also includes a plurality of bearings 15 fixed to the common casing 31 and rotatably supporting the drive shaft 10, the first reduction shaft 11A, and the second reduction shaft 11B respectively.

The differential device 5 includes a differential mechanism 1 housed in a common casing 31. The differential mechanism 1 comprises a differential case 16, a plurality of bearings 17 fixed to the common casing 31 and rotatably supporting the differential case 16, and a differential spur gear 18 fixed to the differential case 16 and meshed with the second pinion gear 14B. The number of teeth of the differential spur gear 18 is greater than the number of teeth of the second pinion gear 14B.

The differential mechanism 1 also comprises a plurality of differential pinion gears 19 rotatably supported within the differential case 16, and left and right side gears 20 (20L, 20R) rotatably supported within the differential case 16 and meshed with the plurality of differential pinion gears 19. The left and right side gears 20 are coaxially connected to left and right axle shafts 21, respectively.

The second pinion gear 14B and the differential spur gear 18 are parallel-axis gears (spur gears, helical gears, etc.). This makes manufacturing easier than using intersecting-axis gears (bevel gears, etc.), and improves vibration and noise performance. The other gears 12, 13A, 13B, and 14A are also parallel-axis gears.

Alternatively, at least one of the gear sets may comprise intersecting axis gears.

A center of the output shaft 9 of the electric motor 3 is defined as an electric motor center C1. A center of the drive shaft 10 of the reducer 2 is defined as a reducer center C2. A center of the axle shaft 21 is defined as an axle shaft center C3. The electric motor center C1 and the reducer center C2 are coaxial, and the electric motor center C1, the reducer center C2, and the axle shaft center C3 are parallel to one another. The electric motor center C1, the reduction gear center C2, and the axle shaft center C3 extend in the left-right direction. The electric motor center C1 and the reducer center C2 are positioned forward of the axle shaft center C3.

The reducer 2 is disposed in front of the differential device 5, and the electric motor 3 is disposed in front of the differential device 5 and to the side (left side) of the reducer 2. This allows the entire electric axle device 100 to be made compact.

As also shown in FIGS. 1 and 2, the common casing 31 is formed by split casings 34L and 34R, which are formed by dividing the common casing 31 into two. After joining portion (joint surfaces) 35L, 35R of the split casings 34L, 34R perpendicular to the axle shaft center C3 are joined together, the split casings 34L, 34R are fixed to each other with a plurality of bolts 36. Joining position of the joining portions 35L and 35R is set as a reference position C4 in the left-right direction.

In the left-right direction, the direction approaching the reference position C4 is the inside in the left-right direction or the inside in the vehicle width direction, and the direction away from the reference position C4 is the outside in the left-right direction or the outside in the vehicle width direction.

The left and right axle shaft casings 30 are configured to be generally symmetrical with respect to the left and right, although their lengths in the left-right direction are slightly different.

The axle shaft casing 30 is formed in a cylindrical shape that extends in the left-right direction. A hub flange 24 for connecting an axle hub (not shown) and a spring bracket 25 for seating a suspension spring such as a leaf spring are integrally fixed by welding to the longitudinal middle portion of the axle shaft casing 30. The spring bracket 25 is positioned inward in the vehicle width direction from the hub flange 24 .

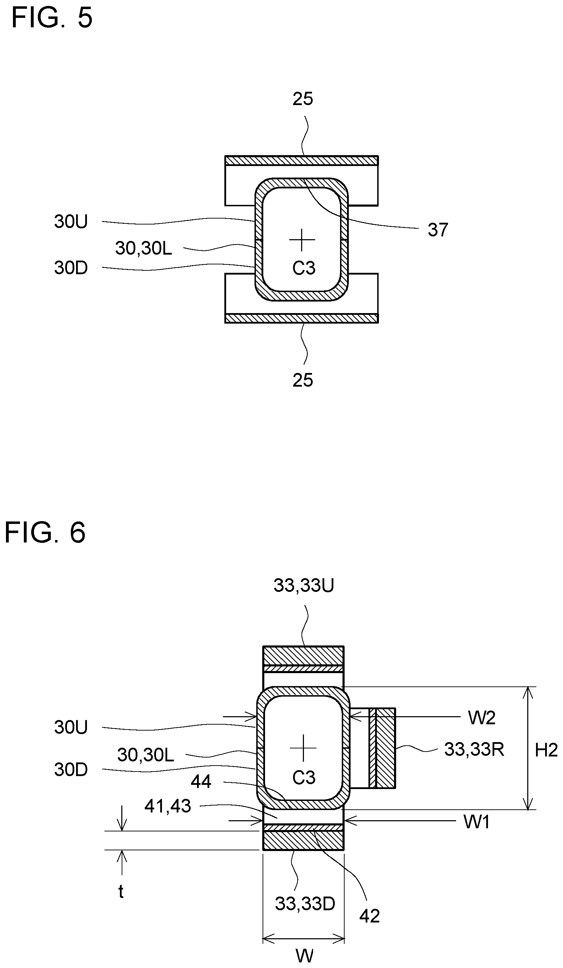

In the axle shaft casing 30, a portion where the hub flange 24 is attached and an outer side portion thereof in the vehicle width direction has a cylindrical shape with a circular cross section. Furthermore, in the axle shaft casing 30, an inner side portion of the portion where the hub flange 24 is attached is shaped like a rectangular tube with a vertically elongated rectangular cross section whose four corners are rounded, and has a constant front-to-rear width, as shown in FIGS. 5 and 6,

As shown in FIG. 1, in the axle shaft casing 30, a portion located inward in the vehicle width direction from the spring bracket 25 has a height (vertical) dimension that gradually increases as it moves inward in the vehicle width direction.

The spring brackets 25 are attached symmetrically to the upper and lower surfaces of the axle shaft casing 30. The spring bracket 25 is formed of a metal plate, specifically an iron plate, that is U-shaped when viewed from the rear as shown in FIG. 1. The upper spring bracket 25 is formed in a U-shape with an open bottom side, and the lower spring bracket 25 is formed in a U-shape with an open top side.

Since the upper and lower spring brackets 25 are symmetrical, only the upper spring bracket 25 will be described here. As shown in FIG. 5, the upper spring bracket 25 has a front-to-rear width greater than that of the axle shaft casing 30. A recess 37 is formed in the lower end surface of the upper spring bracket 25 to fit into the upper surface of the axle shaft casing 30. After the recess 37 is fitted into the upper surface of the axle shaft casing 30, the upper spring bracket 25 is fillet welded to the axle shaft casing 30 and fixed thereto.

As shown in FIGS. 1 to 4, the left and right axle shaft casings 30 have disk-shaped flanges 38 (38L, 38R) at their inner ends in the vehicle width direction that are attached to the common casing 31 by a plurality of bolts 32. The flange 38 is fixed to the axle shaft casing 30 by welding. After the common casing 31 and the flange 38 are joined together, the joint portions are fixed by a plurality of bolts 32. The bolts 32 are attached at equal intervals around the circumference of the flange 38.

More specifically, the left flange 38L is fixed by bolts 32 to the left end (outer side in the vehicle width direction) of the left split casing 34L. The right flange 38R is fixed by bolts 32 to the right end (outer side in the vehicle width direction) of the right split casing 34R.

The axle shaft casing 30 is assembled by welding together previously separated parts. That is, the axle shaft casing 30 is constructed by welding together a cylindrical part 30A, which is formed by welding together the hub flange 24 and its outer portion in the vehicle width direction, square cylindrical parts 30U and 30D, which are positioned inward in the vehicle width direction from the hub flange 24 and are divided into two upper and lower parts, and the flange 38.

As shown in FIGS. 1 to 3, the electric axle device 100 comprises an inverter 39 attached to the outer periphery of the casing 29 of the electric motor 3. The inverter 39 is an electrical component for controlling the rotation of the electric motor 3, and is electrically connected to the electric motor 3 via a relatively short cable. In this embodiment, the inverter 39 is formed in the shape of a flat rectangular box, placed horizontally on the upper surface of the casing 29, and fixed to the casing 29 with bolts (not shown). As a result, the weight of the inverter 39 is supported from below by the casing 29 . The inverter 39 is disposed to the left of a reference position C4 in the left-right direction.

The electric axle device 100 also comprises a park lock actuator 40 attached to the outer periphery of the common casing 31. The park lock actuator 40 is adapted to mesh with a gear (for example, the drive pinion gear 12) of the gear mechanism 6 when activated to lock the gear, thereby realizing an electric parking brake. The park lock actuator 40 is formed in the shape of a flat rectangular box that is smaller than the inverter 39, and is placed horizontally on the upper surface of the common casing 31 and fixed to the common casing 31 by bolts (not shown). As a result, the weight of the park lock actuator 40 is supported from below by the common casing 31.

The park lock actuator 40 is disposed on the right side of the inverter 39 and above the front end of the common casing 31, straddling the reference position C4 in the left-right direction. Therefore, the park lock actuator 40 is disposed across the left and right split casings 34L, 34R.

The inverter 39 and the park lock actuator 40 are both arranged behind the front end of the common casing 31 so as not to protrude forward from the common casing 31. This allows for a compact electric axle device 100 to be realized.

In this embodiment, in order to ensure design freedom, casings of the reducer 2 and the differential device 5 are integrated into a common casing 31, and the left and right axle shaft casings 30 are fastened and fixed to this common casing 31 with bolts 32.

However, with this structure, there are problems in ensuring fastening strength between the common casing 31 and the left and right axle shaft casings 30, and bending strength of the common casing 31 and the left and right axle shaft casings 30 as a whole.

Therefore, in this embodiment, in order to ensure such fastening strength and bending strength, a reinforcing member 33 is provided that is arranged on an outside of the common casing 31 and connects the left and right axle shaft casings 30. This point will be explained below.

As shown in FIGS. 1 to 3, in this embodiment, multiple (specifically three) reinforcing members 33 are provided, including a lower reinforcing member 33D arranged on a lower side of the common casing 31, an upper reinforcing member 33U arranged on an upper side of the common casing 31, and a rear reinforcing member 33R arranged on a rear side of the common casing 31. They have a similar configuration.

As shown in FIGS. 1, 3 and 6, the reinforcing member 33 extends in the left-right direction and is formed of a long, narrow metal plate that is hat-shaped when viewed from the rear (FIG. 1). The cross section of the reinforcing member 33 is a rectangle with a thickness t smaller than a width W. The reinforcing member 33 is made of iron, and is formed by bending a long, thin solid iron plate into a hat shape by press working or the like. The reinforcing member 33 is configured symmetrically in the left-right direction .

The lower reinforcing member 33D is formed in a hat shape that is convex downward, the upper reinforcing member 33U is formed in a hat shape that is convex upward, and the rear reinforcing member 33R is formed in a hat shape that is convex rearward. This allows the common casing 31 to be avoided and interference with the common casing 31 to be avoided.

In this embodiment, brackets 41 are fixed to the left and right axle shaft casings 30 (30L, 30R) by welding, and both ends of the reinforcing member 33 are fixed to the left and right brackets 41 by welding.

The bracket 41 is configured in the same manner as the spring bracket 25 described above. The bracket 41 is formed of a metal plate, specifically an iron plate, that is U-shaped when viewed from the rear. The bracket 41 integrally includes a flat plate portion 42 on which the reinforcing member 33 is seated and fixed, and a pair of legs 43 extending perpendicularly from both left and right ends of the flat plate portion 42. The bracket 41 is attached to the axle shaft casing 30 at a position between the spring bracket 25 and the flange 38, and at a portion where the height dimension gradually changes.

The width W1 of the bracket 41 is set equal to the width W of the reinforcing member 33. These widths W and W1 are slightly smaller than the front-rear width W2 of the axle shaft casing 30. Since the height H2 of the axle shaft casing 30 is greater than the front-to-rear width W2, the widths W, W1 of the reinforcing member 33 and the bracket 41 are smaller than the height H2 of the axle shaft casing 30. The bracket 41 and the reinforcing member 33 are fixed so that both end surfaces in the width W1 and W direction are at the same position.

Three brackets 41 are provided on each of the left and right axle shaft casings 30 in correspondence with the three reinforcing members 33 .

For the lower reinforcing member 33D, brackets 41 are attached to the lower surfaces of the left and right axle shaft casings 30. The bracket 41 is arranged so as to form a U-shape with an open upper side. The upper end surfaces of the pair of legs 43 are formed with shallow recesses 44 that match the shape of the lower surface of the axle shaft casing 30. After the recess 44 is fitted to the lower surface of the axle shaft casing 30, the leg 43 of the bracket 41 is fillet welded to the lower surface of the axle shaft casing 30 and fixed thereto. In the fixed state, the lower reinforcing member 33D and the bracket 41 do not protrude from the axle shaft casing 30 in the front and rear directions.

The upper reinforcing member 33U is the same as the lower reinforcing member 33D except that it is upside down, so a description thereof will be omitted.

The rear reinforcing member 33R has the same configuration as the lower reinforcing member 33D, except that the orientation of the configuration is changed by 90 degrees rearward around the axle shaft center C3. However, the rear surfaces of the left and right axle shaft casings 30 have flat surfaces whose height is greater than the width W1 of the bracket 41. Therefore, the aforementioned recesses 44 are not provided on the end surfaces of the pair of legs 43 of the bracket 41, and after the flat end surfaces of the legs 43 are seated on the flat rear surface of the axle shaft casing 30, the legs 43 are fillet welded to the rear surface of the axle shaft casing 30 and fixed. In the fixed state, the rear reinforcing member 33R and the bracket 41 do not protrude vertically from the axle shaft casing 30.

As shown in FIGS. 1 to 3, the left end surface of each reinforcing member 33 is positioned at the same position as the left end surface of the left bracket 41 in the left-right direction. Also, the position of the right end surface of each reinforcing member 33 in the left-right direction is the same as the position of the right end surface of the right bracket 41.

The lower reinforcing member 33D, the upper reinforcing member 33U and the rear reinforcing member 33R are arranged at equal intervals of 90° in the circumferential direction around the axle shaft center C3.

The lower reinforcing member 33D and the upper reinforcing member 33U are arranged horizontally so that the width W direction thereof coincides with the front-rear direction. This minimizes the projected area of the lower reinforcing member 33D and the upper reinforcing member 33U when viewed from the front, thereby minimizing the increase in air resistance caused by them.

The rear reinforcing member 33R is disposed vertically so that its width W direction coincides with the up-down direction. This maximizes the projected area of the rear reinforcing member 33R when viewed from the front. However, the rear reinforcing member 33R is hidden behind the common casing 31 and is not directly exposed to the wind while traveling. Therefore, there is substantially no increase in air resistance due to the rear reinforcing member 33R.

In this embodiment, the common casing 31 extends forward from a position between the left and right axle shaft casings 30. Therefore, the reinforcing member 33 is not provided at the front of the common casing 31, but is provided at the lower, upper and rear portions thereof.

In this manner, in this embodiment, the left and right axle shaft casings 30 are connected by the reinforcing member 33. Therefore, the fastening strength between the common casing 31 and the left and right axle shaft casings 30 can be increased, and the bending strength of the common casing 31 and the left and right axle shaft casings 30 as a whole can be increased. Therefore, it is possible to ensure sufficient fastening strength and bending strength. Additionally, in this embodiment, the torsional strength of the common casing 31 and the left and right axle shaft casings 30 as a whole can also be increased.

In this embodiment, since a plurality of reinforcing members 33 are provided, it is possible to further ensure fastening strength, bending strength, and torsional strength. Furthermore, the lower reinforcing member 33D, the upper reinforcing member 33U and the rear reinforcing member 33R are arranged in a balanced manner in the circumferential direction around the axle shaft center C3, so that an appropriate strength balance can be obtained.

The reinforcing member 33 is disposed outside the common casing 31 with a gap therebetween. There are also gaps between the three reinforcing members 33D, 33U, and 33R. Therefore, outside air and wind from running can be directly applied to the common casing 31 through these gaps. Therefore, the common casing 31 can be sufficiently air-cooled.

Furthermore, heat from the common casing 31 is transferred to the reinforcing member 33 through the axle shaft casing 30 and the bracket 41, and the heat from the reinforcing member 33 is dissipated into the outside air, so air cooling of the common casing 31 is also possible through the reinforcing member 33.

In addition, in this embodiment, the lower reinforcing member 33D serves to block flying stones while the vehicle is running, so that the common casing 31 and the axle shaft casing 30 can be protected from flying stones. In addition, the lower reinforcing member 33D can be used as a jack-up point during vehicle maintenance.

In this embodiment, the reinforcing member 33 is attached to the axle shaft casing 30 via the bracket 41, which makes it easy to attach the reinforcing member 33 and also allows the attachment position of the reinforcing member 33 to be adjusted by the bracket 41. Therefore, a common reinforcing member 33 can be used as the three reinforcing members 33D, 33U, and 33R, and costs can be reduced by standardizing parts. In fact, this embodiment implements such commonality.

In this embodiment, an inverter 39 is attached to the outer periphery (particularly the upper surface) of the casing 29 of the electric motor 3. Typically, the inverter is attached to the vehicle body and connected to the electric motor via a relatively long cable. However, this requires that a relatively long cable be routed along a predetermined route, which makes assembly difficult.

Furthermore, when the vehicle is running, the electric motor moves up and down relative to the vehicle body. On the other hand, the inverter is fixed to the vehicle body. Therefore, the cable must constantly deform in response to the rising and falling of the motor relative to the inverter, which may result in damage or breakage of the cable. Furthermore, unnecessary loads are also applied to the connectors that connect the cables to the inverter and the motor, which may damage the connector connections. All of these lead to a decrease in reliability.

However, in this embodiment, the inverter 39 is attached to the outer periphery of the casing 29 of the electric motor 3. This allows the cable connecting the inverter 39 and the electric motor 3 to be shortened, facilitating cable routing and improving assembly efficiency.

Furthermore, when the electric motor 3 moves up and down relative to the vehicle body while the vehicle is running, the inverter 39 also moves up and down together with the electric motor 3. Therefore, no relative movement occurs between the inverter 39 and the electric motor 3, and deformation of the cable during lifting and lowering can be prevented. Therefore, it is possible to prevent the cable from being damaged or broken due to the relative movement between the two. Furthermore, unnecessary loads are not applied to the connectors that connect the cables to the inverter 39 and the electric motor 3, and damage to the connector connections can also be prevented. In this way, reliability can be significantly improved.

### [Second embodiment]

Next, a second embodiment of the present disclosure will be described. Note that a description of the same parts as those in the first embodiment will be omitted, and the following description will mainly focus on the differences from the first embodiment.

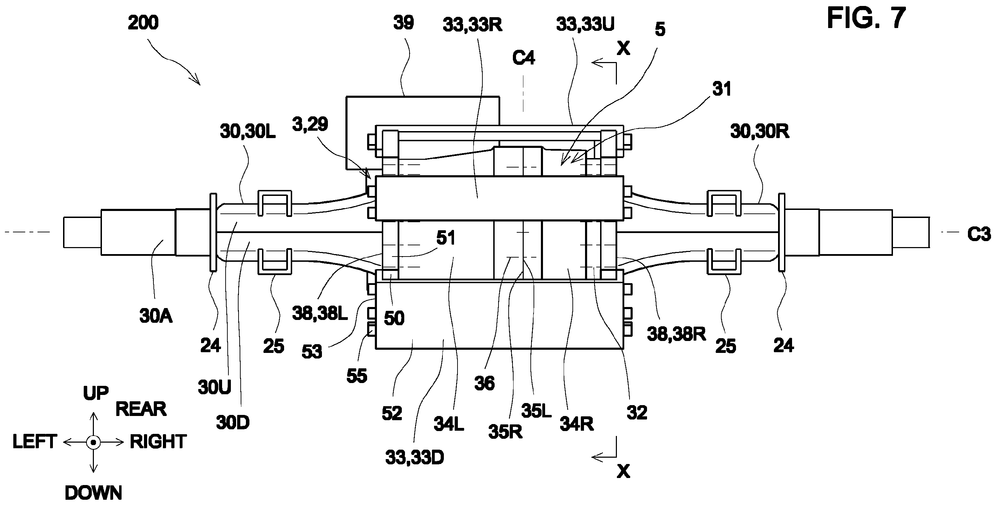

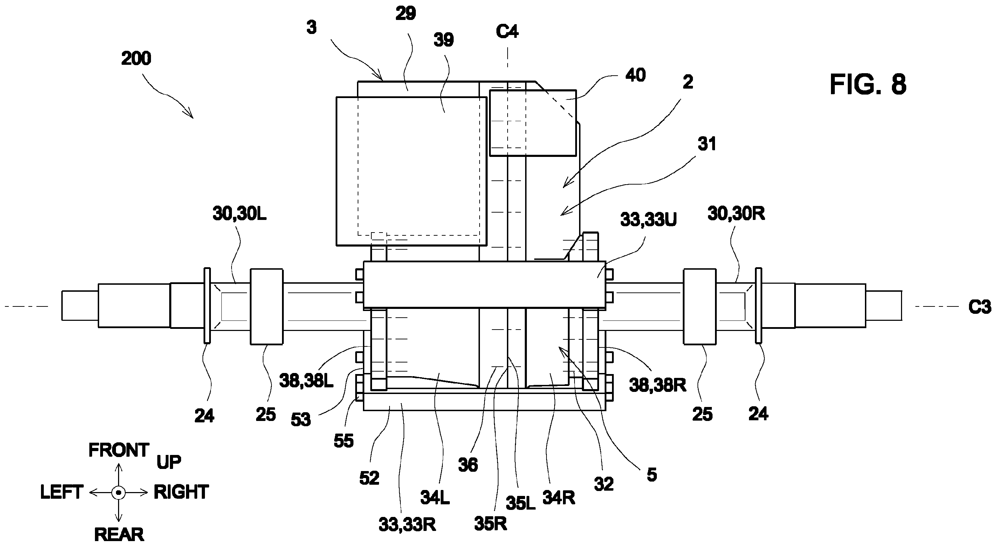

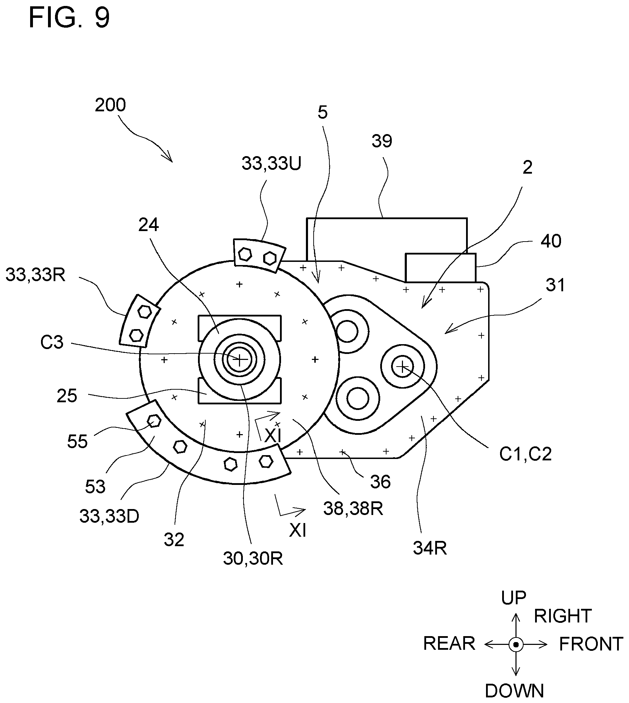

FIGS. 7 to 9 show an electric axle device 200 according to a second embodiment, with FIG. 7 being a rear view, FIG. 8 being a plan view, and FIG. 9 being a right side view.

As shown in FIGS. 7 to 9, also in this embodiment, multiple (specifically three) reinforcing members 33 are provided, including a lower reinforcing member 33D arranged on the lower side of the common casing 31, an upper reinforcing member 33U arranged on the upper side of the common casing 31, and a rear reinforcing member 33R arranged on the rear side of the common casing 31.

In this embodiment, both ends of the reinforcing member 33 are fixed to the left and right flanges 38 (38L, 38R). Therefore, the bracket 41 in the first embodiment is omitted, which reduces the number of parts and manufacturing costs, and facilitates manufacturing.

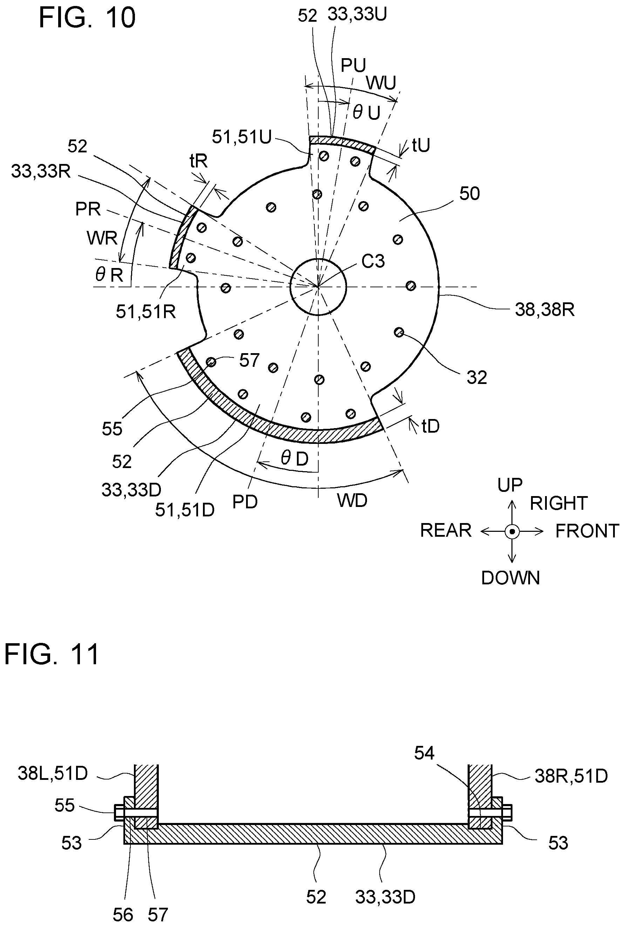

As shown in FIG. 10, the flange 38 has a disk-shaped main body 50 similar to that of the first embodiment, and also has a protrusion 51 provided on the outer periphery of the main body 50 so as to protrude radially outward. Here, the radial direction refers to the radial direction based on the axle shaft center C3. The reinforcing member 33 is attached to and superimposed (or overlapped) on this protrusion 50 . Three protrusions 51, namely a lower protrusion 51D, an upper protrusion 51U, and a rear protrusion 51R, are provided corresponding to the three reinforcing members 33. The protrusion 51 has an outer circumferential surface that is arc-shaped when viewed in the axial direction with the axle shaft center C3 as the reference. The arcuate outer circumferential surfaces of the lower protrusion 51D, the upper protrusion 51U and the rear protrusion 51R have the same radius relative to the axle shaft center C3.

In the circumferential direction based on the axle shaft center C3, the phase centers of the lower protrusion 51D, the upper protrusion 51U and the rear protrusion 51R are defined as PD, PU and PR, respectively, and the phase widths of them are defined as WD, WU and WR, respectively. The phase centers PD, PU, and PR of these protrusions 51D, 51U, and 51R are spaced apart at approximately equal intervals, approximately 90° from one another. Furthermore, the phase centers PD and PU of the lower and upper protrusions 51D and 51U are offset clockwise in the drawing by predetermined angles θD and θU with respect to the vertical axis. The phase center PR of the rear protrusion 51R is also offset clockwise in the drawing by a predetermined angle θR with respect to the axis in the front-rear direction. θD, θU, and θR are angles of approximately the same level. As a result, when the electric axle device 200 is mounted on a vehicle in a rearward tilted state, the phase center PD of the lower protrusion 51D is positioned almost directly below the axle shaft center C3, the phase center PU of the upper protrusion 51U is positioned almost directly above the axle shaft center C3, and the phase center PR of the rear protrusion 51R is positioned almost directly behind the axle shaft center C3.

The phase widths WU and WR of the upper protrusion 51U and the rear protrusion 51R are substantially equal. On the other hand, the phase width WD of the lower protrusion 51D is larger than the phase widths WU and WR, and is preferably at or near 90°, although this is optional. In this embodiment, the phase width WD is 90°, of which the portion in front of the vertical axis passing through the axle shaft center C3 is 25° and the portion behind is 65°.

As shown in detail in FIGS. 10 and 11, the reinforcing member 33 has a main body portion 52 that extends in the left-right direction and has an arc-shaped cross section (see FIG. 10), and hook portions 53 that extend radially inward (based on the axle shaft center C3) from the left and right ends of the main body portion 52. The reinforcing member 33 is formed from a metal plate. Specifically, the material of the reinforcing member 33 is iron, and the reinforcing member 33 is formed by forming a long, thin solid iron plate into an arc-shaped cross section by pressing or the like, and bending both ends of the plate at right angles. The reinforcing member 33 is configured symmetrically in the left-right direction.

Since such a reinforcing member 33 is attached to and superimposed on the protruding portion 51, it is possible to avoid the common casing 31 and avoid interference with the common casing 31, similar to the hat-shaped reinforcing member 33 of the first embodiment.

The main body 52 of the reinforcing member 33 is superimposed on the arc-shaped outer peripheral surface of the protrusion 51. The left and right hook portions 53 of the reinforcing member 33 are superimposed on the outer side surfaces in the left and right direction of the protruding portions 51 of the left and right flanges 38L, 38R. That is, the reinforcing member 33 is fitted across the protruding portions 51 of the left and right flanges 38L, 38R so as to sandwich the protruding portions 51 therebetween.

A relatively shallow groove 54 for fitting the outer periphery of the protrusion 51 is formed on the back surface (the radially inner surface) of the main body 52 adjacent to the hook portion 53. This allows the reinforcing member 33 to be positioned accurately in the left-right direction relative to the flange 38, and also improves the rigidity of the reinforcing member 33 after it has been attached.

The hook portion 53 is fixed to the outer side surface of the protrusion 51 in the left-right direction by bolts 55. That is, a bolt insertion hole 56 is formed through the hook portion 53, and a screw hole 57 is formed through the protrusion portion 51. Bolts 55 are inserted into the bolt insertion holes 56 from the outside in the left-right direction and tightened into the screw holes 57. As a result, the reinforcing member 33 is detachably fixed to the flanges 38L and 38R.

A plurality of such bolt fixing points are provided. The upper reinforcing member 33U and the rear reinforcing member 33R are provided with two points, and the lower reinforcing member 33D is provided with four points.

As shown in FIG. 10, the lower reinforcing member 33D, the upper reinforcing member 33U and the rear reinforcing member 33R have the same phase centers PD, PU, PR and phase widths WD, WU, WR as the lower protrusion 51D, the upper protrusion 51U and the rear protrusion 51R. Therefore, the phase centers PD, PU, PR and phase widths WD, WU, WR of the protrusions 51D, 51U, 51R can be rephrased as the phase centers PD, PU, PR and phase widths WD, WU, WR of the reinforcing members 33D, 33U, 33R.

The phase widths WU and WR of the upper reinforcing member 33U and the rear reinforcing member 33R are substantially equal. On the other hand, the phase width WD of the lower reinforcing member 33D is larger than the phase widths WU and WR, and is preferably at or near 90°, although this is optional. In this embodiment, the phase width WD is 90°, of which the portion in front of the vertical axis passing through the axle shaft center C3 is 25° and the portion behind is 65°.

By increasing the phase width WD of the lower reinforcing member 33D in this way, flying stones can be blocked over a wider area by the lower reinforcing member 33D while the vehicle is running. Furthermore, when the lower reinforcing member 33D is used as a jack-up point, the load acting on the lower reinforcing member 33D can be dispersed over a wide range.

In addition, the thickness tD of the main body portion 52 of the lower reinforcing member 33D is greater than the thicknesses tU and tR of the main body portions 52 of the upper reinforcing member 33U and the rear reinforcing member 33R. Therefore, the rigidity of the lower reinforcing member 33D can be increased, making it suitable as a jack-up point.

When mounted on a vehicle, a jack is placed near the phase center PD of the lower reinforcing member 33D, but in this embodiment, there are no bolts 55 in the area near the phase center PD. Therefore, deformation of the bolt 55 due to the load when jacking up can be suppressed.

The thicknesses tU and tR of the main body portions 52 of the upper reinforcing member 33U and the rear reinforcing member 33R are equal to each other. The upper reinforcing member 33U and the rear reinforcing member 33R may be the same component. This allows the manufacturing costs to be reduced.

The effects of this embodiment are basically the same as those of the first embodiment. In addition, in this embodiment, since the reinforcing member 33 is fixed to the flange 38, the bracket 41 of the first embodiment can be omitted, and the number of parts can be reduced, resulting in cost reduction and easier manufacturing.

Furthermore, in the first embodiment, the width W of the reinforcing members 33D, 33U, and 33R is limited to some extent by the width W1 of the bracket 41 (see FIG. 6), but in this embodiment, there is no such limitation on the phase widths WD, WU, and WR of the reinforcing members 33D, 33U, and 33R. Moreover, the total circumferential length of the flange 38 in this embodiment is significantly greater than the total width W1 of the bracket 41 in the first embodiment. Therefore, the phase widths WD, WU, WR of the reinforcing members 33D, 33U, 33R of this embodiment can be made larger than the width W of the reinforcing members 33D, 33U, 33R of the first embodiment. Therefore, in this embodiment, the fastening strength and bending strength can be increased compared to the first embodiment. In fact, the phase width WD of the lower reinforcing member 33D of this embodiment is significantly larger than the width W of the lower reinforcing member 33D of the first embodiment.

Furthermore, since the reinforcing member 33 has a main body portion 52 with an arc-shaped cross section and hook portions 53 at the left and right ends of the main body portion 52, the rigidity of the reinforcing member 33 can be increased, which is further advantageous in ensuring fastening strength and bending strength.

The flange 38 is provided with a protrusion 51, and the main body 52 of the reinforcing member 33 is superimposed on its outer peripheral surface, so that the reinforcing member 33 is spaced radially outward from the common casing 31, thereby suitably preventing interference therebetween.

The left and right hook portions 53 are superimposed on the outer side surfaces of the left and right protrusions 51 in the left-right direction, so that the reinforcing member 33 can be accurately positioned in the left and right direction relative to the left and right flanges 38.

The left and right hook portions 53 are fixed to the outer side surfaces of the left and right protrusions 51 in the left-right direction by the bolts 55, so that the hook portions 53 can be fixed firmly and easily. Furthermore, the reinforcing member 33 can restrain the opening and closing movement of the left and right flanges 38 when the electric axle device 200 is bent. In addition, the reinforcing member 33 is detachable and can be replaced when damaged.

Although the embodiments of the present disclosure have been described in detail above, various other embodiments and modifications of the present disclosure are possible.

For example, the reinforcing member 33 may have a structure other than that described above. The reinforcing member 33 of the first embodiment may have another cross-sectional shape (circular, etc.), and may have a hollow structure instead of a solid structure. Therefore, the reinforcing member 33 may be formed of a circular shaft, a square shaft, a circular tube, a square tube, or the like.

Similarly, the axle shaft casing 30 may have a structure other than that described above. For example, the cross-sectional shape of the portion located inward in the vehicle width direction from the hub flange 24 may be circular or elliptical. In addition, the shapes of the seating surfaces of the spring bracket 25 and the bracket 41 may be changed accordingly.

The reinforcing member 33 of the first embodiment may be welded directly to the axle shaft casing 30 without using the bracket 41 .

The number of reinforcing members 33 can be changed, and one or two may be provided, or four or more may be provided. For example, only one or two of the lower reinforcing member 33D, the upper reinforcing member 33U, and the rear reinforcing member 33R may be provided.

In the first embodiment, if possible, the reinforcing member 33 may be fixed to the bracket 41 or the axle shaft casing 30 with bolts.

In the second embodiment, if possible, both left and right end portions of the reinforcing member 33 may be fixed to the left and right flanges 38L, 38R by welding.

The embodiments of the present disclosure are not limited to the above-described embodiments, and all modifications, applications, and equivalents encompassed within the spirit of the present disclosure as defined by the claims are included in the present disclosure. Therefore, the present disclosure should not be interpreted as being limited, and can be applied to any other technology that falls within the scope of the concept of the present disclosure.

## Claims

1. An electric axle device for a vehicle comprising:
an electric motor;
a reducer connected to an output side of the electric motor;
a differential device connected to an output side of the reducer;
left and right axle shafts connected to an output side of the differential device;
left and right axle shaft casings that respectively contain the left and right axle shafts;
a common casing that is common to the reducer and the differential device, the common casing being sandwiched between the left and right axle shaft casings and fixed to the left and right axle shaft casings with bolts; and
a reinforcing member that is arranged on an outside of the common casing and connects the left and right axle shaft casings.

2. The electric axle device for the vehicle according to claim 1, wherein brackets are fixed to the left and right axle shaft casings by welding, and both ends of the reinforcing member are fixed to the left and right brackets by welding.

3. The electric axle device for the vehicle according to claim 1, wherein the reinforcing member is formed by a long, thin metal plate extending in the left-right direction and formed in a hat shape.

4. The electric axle device for the vehicle according to claim 1, wherein the reinforcing member is arranged on a lower side of the common casing.

5. The electric axle device for the vehicle according to claim 1, wherein the reinforcing member is arranged on an upper side of the common casing.

6. The electric axle device for the vehicle according to claim 1, wherein the reinforcing member is arranged on a rear side of the common casing.

7. The electric axle device for the vehicle according to claim 1, wherein the common casing extends forward from a position between the left and right axle shaft casings.

8. The electric axle device for the vehicle according to claim 1, wherein the common casing is a casting made of aluminum or an aluminum alloy.

9. The electric axle device for the vehicle according to claim 1, wherein the left and right axle shaft casings have flanges that are attached to the common casing by the bolts.

10. The electric axle device for the vehicle according to claim 9, wherein both ends of the reinforcing member are fixed to the left and right flanges.

11. The electric axle device for the vehicle according to claim 10,
wherein the reinforcing member has a main body portion extending in the left-right direction and formed with an arc-shaped cross section, and hook portions extending radially inward from the left and right ends of the main body portion,
the flange has a disk-shaped main body portion and a protrusion portion provided on an outer periphery of the main body portion so as to protrude radially outward, and
the main body portion is superimposed on an arc-shaped outer peripheral surface of the protrusion portion, and the hook portions are superimposed on outer left-right side surfaces of the protrusion portion.

12. The electric axle device for the vehicle according to claim 11, wherein the hook portions are fixed to the outer left-right side surfaces of the protrusion portion by bolts.
